# EUROPÄISCHE PATENTSCHRIFT

(11) **EP 0 537 212 B1**
(45) Veröffentlichungstag und Bekanntmachung des Hinweises auf die Patenterteilung: **28.09.1994**
(21) Anmeldenummer: 91911784.6
(22) Anmeldetag: 04.07.1991
(51) Int. Cl.: H02G 11/02, B65H 75/34, B64F 1/305

(54) **VORRICHTUNG ZUM VERSTAUEN EINES DICKEN KABELS**
DEVICE FOR STOWING AWAY THICK CABLES
DISPOSITIF SERVANT A ABRITER UN CABLE EPAIS

(30) Priorität: 05.07.1990 DE 9010213 U
(43) Veröffentlichungstag der Anmeldung: 21.04.1993
(73) Patentinhaber: Manfred Fladung GmbH, 63776 Mömbris (DE)
(72) Erfinder: FLADUNG, Manfred, D-8752 Mömbris (DE)
(74) Vertreter: Stoffregen, Hans-Herbert, Dr. Dipl.-Phys.
(86) Internationale Anmeldenummer: EP9101259
(87) Internationale Veröffentlichungsnummer: WO9201323

(56) Entgegenhaltungen:
- EP-A- 0 163 025
- WO-A-80/00643
- WO-A-86/05632
- DE-A- 3 347 965
- DE-U- 9 010 213
- US-A- 2 486 167
- US-A- 3 106 366
- US-A- 3 372 887

## Beschreibung

Die Erfindung bezieht sich auf eine Vorrichtung zum Verstauen eines sich aus mehreren Adern zusammensetzenden dicken Kabels, insbesondere Versorgungskabels einer zentralen Bordnetzversorgungsanlage für z.B. Flugzeuge, mit einer drehbaren Aufwickeltrommel, die einen hohlzylindrischen Trägerkörper zum einlagigen Aufwickeln mehrerer Windungen des Kabels aufweist, das seinerseits über ein innerhalb des Trägerkörpers verlaufendes Ausgleichskabel vorzugsweise mit einem Festanschluß verbunden ist, wobei sich das Ausgleichskabel in Achsrichtung der Aufwickeltrommel derart erstreckt, daß das Ausgleichskabel beim Abwickeln des Anschlußkabels von der Aufwickeltrommel stärker und beim Aufwickeln schwächer verdreht ist

Eine entsprechende Vorrichtung ist aus der WO-A-80/00643 bekannt. Das im Inneren des zylindrischen Trägerkörpers verlaufende Kabel ist in Abhängigkeit vom Umfang des auf- bzw. abgewickelten Versorgungskabels mehr oder weniger um eine Welle herum verdrillt. Für dicke Kabel ist eine entsprechende Vorrichtung nicht geeignet, da ein Verdrillen über die gesamte Länge des Ausgleichskabels nicht möglich wäre.

Eine Verstauvorrichtung ist z.B. der EP-B-0 163 025 zu entnehmen. Die Aufwickelrolle umfaßt zwei Trommelscheiben, zwischen denen das Anschlußkabel in aufgewickeltem Zustand liegt. Der Abstand zwischen den beiden Trommelscheiben ist auf den Durchmesser des Anschlußkabels derart abgestimmt, daß sich die aufgewickelten Lagen in einer Ebene nebeneinander befinden. Das Anschlußkabel liegt im aufgewickelten Zustand quasi spiralförmig auf einer Innenfläche von einer der Trommelscheiben. Die Aufwickeltrommel selbst, die vorzugsweise unter der Fahrgastbrücke anordbar ist, weist eine vertikal verlaufende Drehachse auf. Durch die Anordung des Anschlußkabels ist gewährleistet, daß dieses beim Auf- und Abwickeln nicht verdrillt wird, wodurch andernfalls ein Brechen der das Anschlußkabel bildenden Ader erfolgen könnte. Die Verbindung zwischen dem Anschlußkabel und dem Festanschluß wie Anschlußkasten, also das Ausgleichskabel verläuft nach dem bekannten Vorschlag spiralförmig in einem domförmigen Gehäuseabschnitt, wobei zur Vermeidung eines Brechens der Adern diese freigelegt sind. Die Adern bilden folglich quasi einen "Quirl", der in Abhängigkeit von dem auf-bzw. abgewickelten Zustand des Anschlußkabels unter gleichzeitiger Verdrillung stärker oder schwächer spiralförmig verdreht ist.

Durch diesen Vorschlag kann die wirksame Länge des auf die Aufwickeltrommel zu verstauenden Anschlußkabels im Vergleich zu solchen Anordnungen erheblich vergrößert werden, bei denen eine der Aufwickeltrommel zugeordnete Ausgleichstrommel angeordnet ist, auf der ein Ausgleichskabel der Länge aufwickelbar ist, die der des Anschlußkabels entspricht (DE-C 33 47 965).

Bei einer Kabelaufwickelvorrichtung nach der US-A-2,486,167 wird ein ab- bzw. aufzuwickelndes Kabel durch eine Aufnahme geführt, die mittels einer Spindel in Längsrichtung der Aufwickelvorrichtung verschiebbar ist.

Bei einer Kabeltrommel nach der US-A-3,106,366 ist es bekannt, das Kabel über als Walzen ausgebildete Gleitelemente zu führen.

Aufgabe der vorliegenden Erfindung ist es, eine Vorrichtung der eingangs beschriebenen Art so weiterzubilden, daß diese bei überaus kompaktem Aufbau die Möglichkeit schafft, problemlos dicke Kabel aufzunehmen, die ohne Beschädigung insbesondere das Ausgleichskabel häufig auf- und abwickelbar sind.

Die Aufgabe wird erfindungsgemäß im wesentlichen dadurch gelöst, daß das Ausgleichskabel oder bereichsweise freiliegende Adern dieses in etwa mittig innerhalb des Trägerkörpers von einer Aufnahme gehalten sind.

Durch die erfindungsgemäßen Maßnahmen wird der innerhalb des Trägerkörpers verlaufende Abschnitt des Ausgleichkabels in zwei vorzugsweise gleichlange Abschnitte unterteilt, wodurch wiederum eine Aufteilung der Verdrillung erfolgt, so daß im Vergleich zu bekannten Anordnungen in der jeweiligen Richtung eine größere Anzahl von Umdrehungen durchgeführt werden können, ohne daß das Ausgleichskabel im unerwünschten Umfang belastet wird.

Damit die Aufnahme beim Verdrehen und Verdrillen der Adern des Ausgleichskabels zusätzlich Zwangskräfte nicht hervorrufen kann, ist vorgesehen, daß die Aufnahme um die Längsachse der Aufwickeltrommel relativ zu dieser drehbar ausgebildet ist.

Insbesondere kann die Aufnahme ein zumindest eine im Achsbereich der Aufwickeltrommel verlaufende zur Durchführung des Ausgleichkabels bestimmte Durchbrechung aufweisendes Scheibenelement sein.

Es besteht die Möglichkeit, die Aufnahme mit mehreren im Achsbereich der Aufwickelrolle verlaufenden Durchbrechungen zu versehen, in denen Adern des Ausgleichskabels durchgeführt werden.

Nach einem weiteren Vorschlag ist die Aufnahme ein von von der Innenwandung des Trägerkörpers ausgehenden Führungen gehaltenes Scheibenelement, welches hierdurch unter Vermeidung großer Reibungskräfte relativ zu der Aufwickeltrommel drehbar ist.

Nach einem anderen Vorschlag kann die Aufnahme ein von einer Welle ausgehendes scheibenförmiges Element sein, wobei die Welle entlang der Drehachse der Aufwickeltrommel verläuft und zu dieser verdrehbar ist.

Bei horizontal verlaufender Drehachse der Aufwickeltrommel zeigt bei aufgewickeltem Kabel das innerhalb des Trägerkörpers verlaufende Ausgleichskabel einen sinusförmigen Verlauf, d.h., daß die zwischen den im Bereich der Stirnbereiche der Aufwickeltrommel und der Aufnahme verlaufenden Abschnitte durchhängen.

Die Aufwickeltrommel selbst kann in einem quaderförmigen Gehäuse angeordnet sein, wobei parallel zur Längsachse der Aufwickeltrommel ein Kabeldurchführungsschlitz verläuft, entlang dessen eine Führung verschiebbar angeordnet ist, durch die das Kabel nach außen geführt wird. Diese Führung kann mittels eines Schneckengetriebes derart entlang der Achse der Aufwickeltrommel verschoben werden, daß die Führung stets in dem Bereich vorliegt, wo das Kabel von dem Trägerkörper abgerollt bzw. auf diesen gewickelt wird. Die Drehung der Aufwickeltrommel und die Verschiebung der Führung sind folglich synchron geschaltet.

Bei einer Vorrichtung mit unterhalb einer Fluggastbrücke angeordneter Aufwickeltrommel ist vorgesehen, daß die Drehachse der Aufwickeltrommel horizontal oder im wesentlichen horizontal verläuft. Hierin ist ein weiterer Unterschied zu den bekannten Verstauvorrichtungen zu sehen. Durch die horizontale Anordnung kann problemlos der Antrieb wie Getriebemotor an einer Stirnwandung des Gehäuses angeflanscht werden, um der Aufwickeltrommel den gewünschten Drehsinn aufprägen zu können.

Um ein leichtes Auf- und Abrollen des Kabels zu ermögiichen, ist vorgesehen, daß zu einer reibungsmindernden Abstützung des Kabels im Abstand zu der Kabelaufwikkelrolle und achsparallel zu dieser drehbar gelagerte Gleitelemente verlaufen. Insbesondere sind die Gleitelemente sich achsparallel zu dem Trägerkörper erstreckende Zylinderelemente.

Um insbesondere bei einer Unterfluranordnung das schwere Kabel problemlos ab- bzw. aufrollen zu können, stehen die zueinander beabstandeten und um den Umfang des Trägerkörpers verteilten Zylinderelemente untereinander in Wirkverbindung. Dabei können die Zylinderelemente über vorzugsweise Zahnräder und in diese eingreifende Ketten oder Riemen miteinander verbunden sein.

Ein selbständiger Lösungsvorschlag einer Vorrichtung der eingangs beschriebenen Art zeichnet sich dadurch aus, daß die Aufwickeltrommel zum einlagigen Aufwickeln des Kabels einen hohlzylindrischen Trägerkörper aufweist, innerhalb dessen das Ausgleichskabel verläuft, welches bzw. dessen Adern in etwa mittig innerhalb des Trägerkörpers gehalten bzw. lagefixiert ist, und daß zu einer reibungsmindernden Abstützung des Kabels achsparallel zur Drehachse des Trägerkörpers untereinander in Wirkverbindung stehende, drehbar gelagerte Gleitelemente angeordnet sind.

Weitere die Erfindung gegebenenfalls jeweils für sich prägende Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: zwei nebeneinander angeordnete Kabelverstauvorrichtungen, eine davon mit entfernten Gehäuseteilen,
- Fig. 2: eine unter einer Fahrgastbrücke angeordnete Vorrichtung,
- Fig. 3: eine Fahrgastbrücke mit zwei nebeneinander angeordneten Verstauvorrichtungen,
- Fig. 4: eine Schnittdarstellung durch eine erste Ausführungsform einer Verstauvorrichtung,
- Fig. 5: eine Schnittdarstellung einer zweiten Ausführungsform einer Verstauvorrichtung mit weggelassenem Kabel,
- Fig. 6: eine Schnittdarstellung entlang der Linie IV-IV in Fig. 5 und
- Fig. 7: eine zur Fig. 1 alternative Ausführungsform,
- Fig. 8: eine zur Fig. 4 alternative Ausführungsform und
- Fig. 9: einen Schnitt AA in Fig. 8

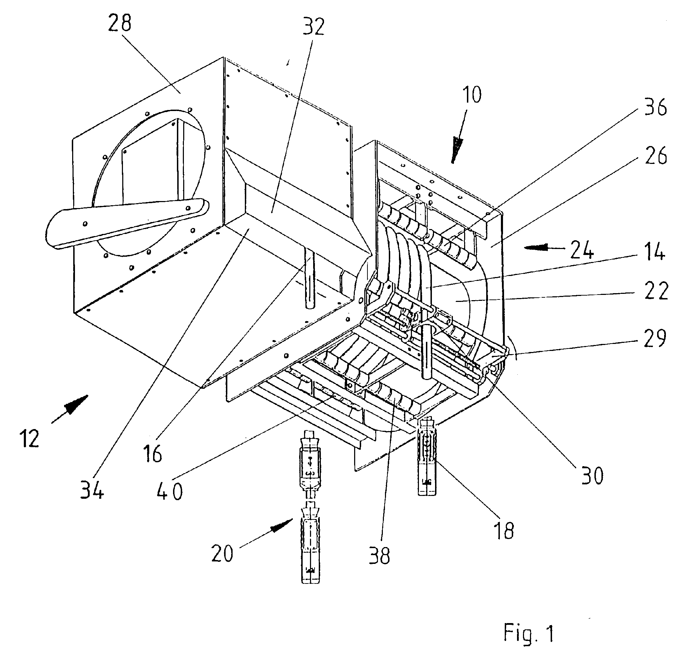

In Fig. 1 sind zwei nebeneinander angeordnete Verstauvorrichtungen (10) für insbesondere jeweils ein aus mehreren Adern zusammengesetztes dickes Versorgungskabel (14) bzw. (16) dargestellt, über die z.B Flugzeuge von einer zentralen Bordversorgungsanlage versorgt werden. Die Kabel (14) und (16) können z.B. einen Durchmesser von 46 mm aufweisen und enthalten neben Kabeladern für die 400-Hz Drehstromversorgung eine Vielzahl von Steuerleitungen. Am Ende der Kabel (14) und (16) sind vorzugsweise als Panel ausgebildete Stecker (18) und (20) angeordnet, die in entsprechende Aufnahmen des Flugzeuges gesteckt werden.

Jede Verstauvorrichtung (10) umfaßt eine einen hohlzylindrischen Trägerkörper (22) umfassende Aufwickeltrommel (24), auf die einlagig das Kabel (14) aufgewickelt wird, also mehrere Windungen des Kabels (14) nebeneinander aufgereiht sind.

Die Aufwickeltrommel (24), also der Trägerkörper (22) ist drehbar in einem Gehäuse (26) bzw. (28) gelagert, wobei der Antrieb über z.B. einen Getriebemotor erfolgen kann.

Das Kabel (14) -wie das Kabel (16)- wird durch eine von einer Gewindespindelanordnung (29) parallel zur Längs- und damit Drehachse der Aufwickeltrommel (24) verschiebbare Führung (30) geführt, wobei deren Stellung von der Länge des aufgewickelten bzw. abgewickelten Kabels (14) abhängt. Mit anderen Worten stellt die Führung (30) sicher, daß die Windungen des Kabels (14) eng aneinanderliegend auf dem Trägerkörper (22) angeordnet sind. Folglich bewegt sich die Führung (30) synchron mit der Drehung der Aufwickeltrommel (24).

Die Führung (30) ist von einem vorspringenden Gehäuseabschnitt abgedeckt, der dem mit dem Bezugszeichen (32) versehenen Abschnitt der Vorrichtung (12) entspricht. In diesem Bereich weist das jeweilige Gehäuse (26) bzw. (28) einen Schlitz (34) auf, durch den das Kabel (14) bzw. (16) nach außen geführt wird.

Um beim Auf- bzw. Abrollen des Kabels (14) und (16) zu Abnutzungen und gegebenenfalls Beschädigungen führende Schleifbewegungen zwischen dem Kabel (14) bzw. (16) und dem Inneren des Gehäuses (26) bzw. (28) auszuschließen, verlaufen umfangsseitig um die Aufwickeltrommel (24) und parallel zu dessen Achse Gleitelemente, die beispielhaft mit den Bezugszeichen (36), (38) und (40) versehen sind. Bei diesen Gleitelementen (36), (38) und (40) handelt es sich um auf Wellen angeordnete Rollen, durch die ein gleitendes Entlangführen des Kabels (14) bzw. (16) ermöglicht wird. Die die Rollen aufnehmenden Wellen verlaufen selbstverständlich parallel zu den Längs- und damit Drehachsen der jeweiligen Aufwickeltrommel.

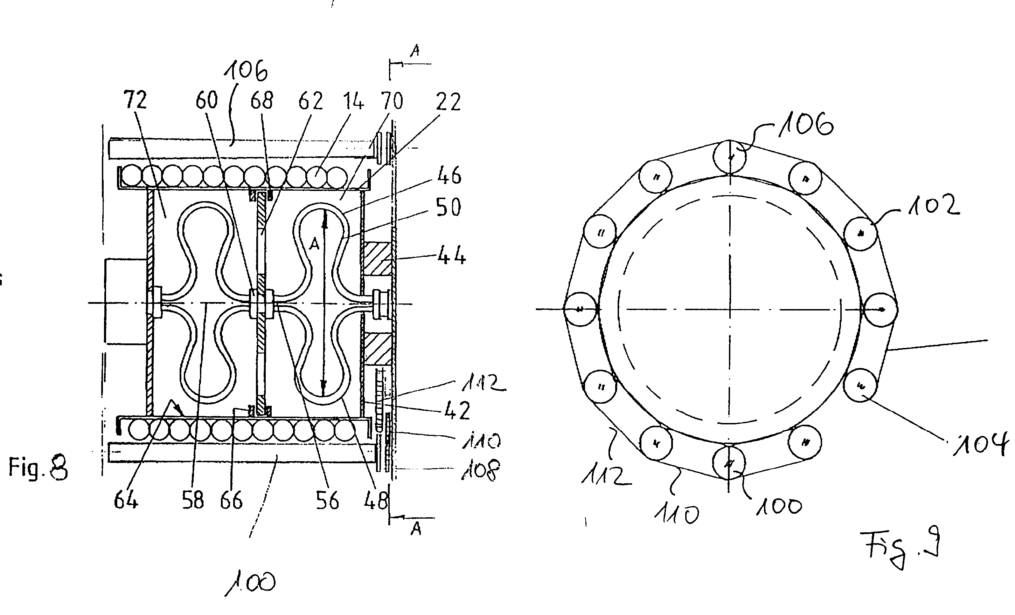

Das Kabel (14) bzw. (16) wird über ein der Fig. 1 nicht zu entnehmendes Ausgleichskabel mit einem Festanschluß verbunden, der zu der Aufwickeltrommel (24) unverdrehbar ausgebildet ist. Erfindungsgemäß ist nun vorgesehen, daß dieses das Kabel (14) bzw. (16) mit dem Festanschluß verbindende Ausgleichskabel im Inneren des als Hohlzylinder ausgebildeten Trägerkörpers (22) geführt wird, wie es rein schematisch und beispielhaft den Fig. 4 und 5 zu entnehmen ist.

Der als Hohlzylinder ausgebildete Trägerkörper (22) ist gegenüber einem rein schematisch und beispielhaft an einer Stirnwandung (42) angeordneten Festanschluß (44) drehbar, wobei von dem Festanschluß (44) eine Verbindung zu einer nicht dargestellten zentralen Bordversorgungsanlage führen kann. Von dem Festanschluß (44) geht ein Ausgleichskabel (46) aus, das vom Aufbau dem des auf den Trägerkörper (22) aufgewickelten Kabels (14) entspricht, wobei jedoch dessen Adern freigelegt sind. Diese sind rein beispielhaft mit den Bezugszeichen (48) und (50) versehen. Sind in der Darstellung der Fig. nur wenige Adern (48), (50) eingezeichnet, so kann sich das Kabel (14) bzw. (16) in der Praxis aus zig Einzeladern zusammensetzen.

Das Ausgleichskabel (46) wird auf der fest mit dem Trägerkörper (22) verbundenen und dem Festanschluß (44) gegenüberliegenden Stirnwandung zusammengeführt, um von dort zu dem aus der Verstauvorrichtung (10) bzw. (12) herauszuführenden dicken und wenig flexiblen Kabel (14) und (16) überzugehen.

Innerhalb des Trägerkörpers (22) sind die Adern (48), (50) frei drehbar und bilden quasi einen Quirl, der im Mittenbereich (56) eingeschnürt ist. Unter Mittenbereich ist dabei der Schnittpunkt von Mittel- und damit Drehachse (58) und der in der Mitte des Trägerkörpers (22) verlaufenden Querachse zu verstehen.

Die Einschnürung (56) wird durch eine oder mehrere im Bereich der Achse (58) verlaufende Durchbrechungen (60) eines Scheibenelementes (62) bewirkt, durch die die Adern (48) und (50) hindurchgeführt werden. Das Scheibenelement (62) ist um die Achse (58) und relativ zu dem Trägerkörper (22) drehbar ausgebildet. Hierzu wird das Scheibenelement zwischen von der Innenwandung (64) des Trägerkörpers (22) abragende Führungsabschnitte (66) und (68) festgelegt.

Wird das Kabel (14) bzw. (16) abgewickelt, so werden die Adern (48) und (50) unter gleichzeitigier Verdrillung verdreht, wodurch gleichzeitig die radiale Ausdehnung A verkleinert wird.

Dadurch, daß das Ausgleichskabel (46) aufgrund der Einschnürung (56) in zwei Teilbereiche (70) und (72) aufgeteilt wird, ist im Vergleich zu bekannten Vorrichtungen eine Verteilung der Verdrehung und Verdrillung in einem Umfang möglich, daß die Länge des aufzuwickelnden Kabels (14) größer als bei bekannten Vorrichtungen ist.

Sind in Fig. 4 die Adern (48) und (50) wie ein Quirl, also in beliebige Richtung verteilt eingezeichnet, so dürfte zumindest bei horizontal verlaufender Drehachse (58) bei aufgewickeltem Kabel (14) normalerweise ein Verlauf der Adern (48) und (50) dahingehend gegeben sein, daß diese schwerkraftbedingt in Richtung des tiefsten Punktes fallen, so daß sich ein sinusförmiger Verlauf ergibt, wie er der Fig. 5 zu entnehmen ist.

Das Ausführungsbeispiel der Fig. 5 unterscheidet sich von dem der Fig. 4 dahingehend, als daß die Einschnürung (56) durch ein auf einer Welle (74) angeordnetes Scheibenelement (76) bewirkt wird, in dem peripher angeordnete Durchbrechungen (78), (80) vorhanden sind, durch die die Adern (48), (50) des Ausgleichskabels (46) hindurchgeführt werden. Die Welle (74) und damit das Scheibenelement (76) ist um die Drehachse (58) der Aufwickeltrommel (24) und damit des Trägerkörpers (22) und relativ zu diesem drehbar.

Andere Konstruktionen zur Erzielung der Einschnürung (56) sind selbstverständlich gleichfalls möglich. Dabei sollte jedoch sichergestellt sein, daß die Einschnürung (56) relativ zu der Aufwickeltrommel drehbar ist.

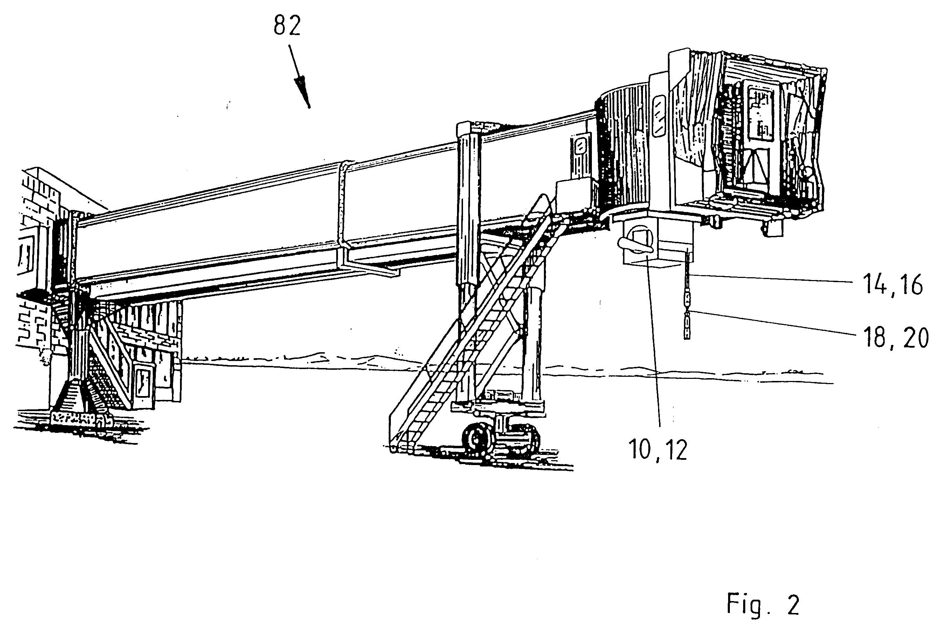

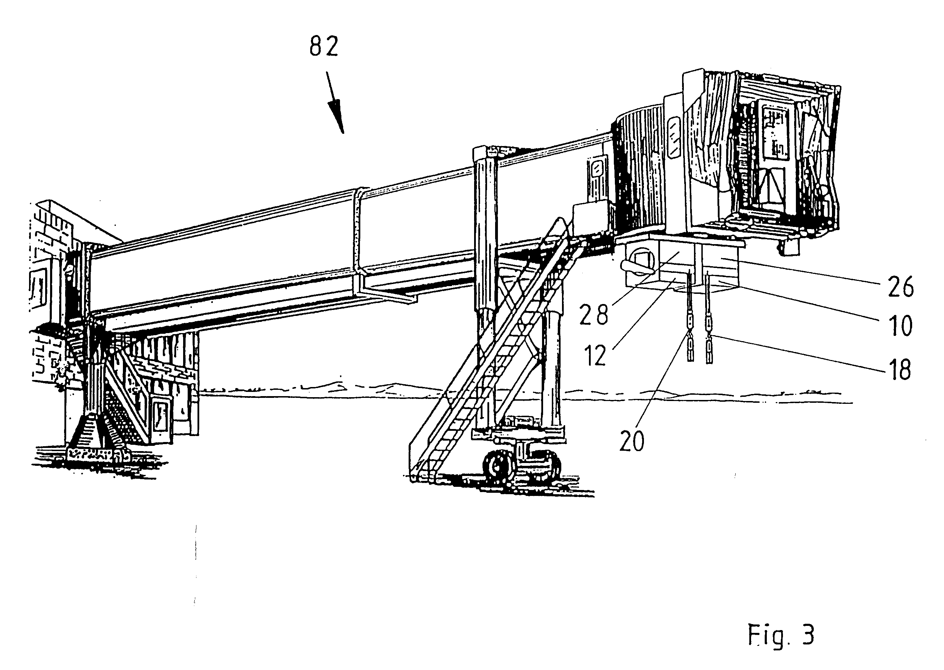

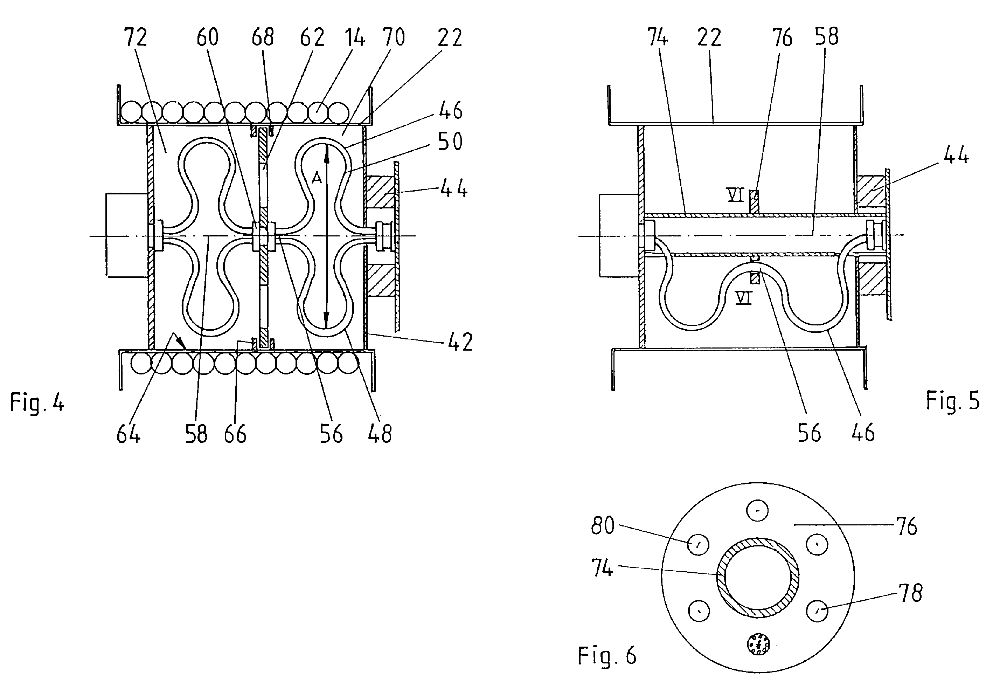

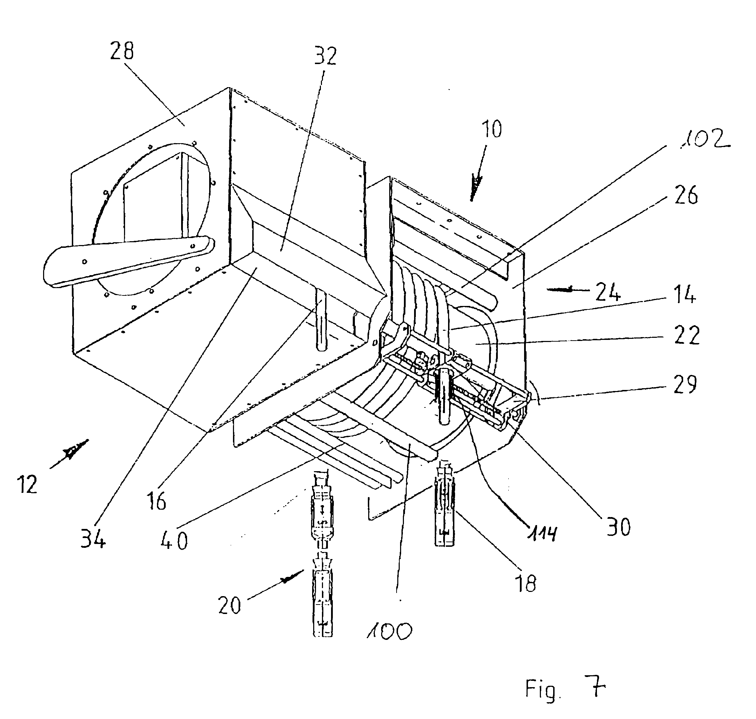

Die erfindungsgemäß ausgebildete Verstauvorrichtung (10) bzw. (12) kann nunmehr unterhalb einer teleskopartig ausgebildeten Fahrgastbrücke (82) angeordnet sein, wie es den Fig. 2 und 3 zu entnehmen ist.

In Fig. 2 ist eine Fahrgastbrücke mit einer Vorrichtung (10) oder (12) dargestellt, wobei man den Stecker (18) bzw. (20) mit dem über den Gehäuseschlitz (34) herausgeführten Kabel (14) bzw. (16) erkennen kann.

Eine Tandemausführung ist der Fig. 3 zu entnehmen, wobei die die Aufwickeltrommel aufnehmenden Gehäuse (26) und (28) nebeneinander angeordnet sind, so daß die Achsen der Aufwickeltrommeln fluchten können. Bei einer entsprechenden Konstruktion kann ein einziger Antrieb zum Drehen der Aufwickeltrommeln benutzt werden, wobei über nicht dargestellte Getriebe und Kupplungen ein Zu- bzw. Abschalten der Aufwickeltrommel erfolgen kann, deren Kabel nicht auf- bzw. abgewickelt werden soll.

In den Fig. 7 - 9 sind alternative Ausführungsformen zu denen der Fig. 1 und 4 dargestellt, um insbesondere eine Unterfluranordnung der Verstauungsvorrichtung (10) zu ermöglichen. Dabei werden jedoch gleiche Elemente mit gleichen Bezugszeichen versehen.

Die Ausführungsform der Fig. 7 - 9 unterscheidet sich von der der Fig. 1 und 4 im wesentlichen allein hinsichtlich der reibungsmindernden Gleitelemente, an denen sich das Kabel (14) beim Auf- bzw. Abrollen abstützt.

In den Fig. 7 - 9 werden kugelgelagerte Wellen als Gleitelemente benutzt, von denen einige beispielhafte mit den Bezugszeichen (100), (102), (104) und (106) versehen sind. Die Wellen (100), (102), (104) und (106) können aus Kunststoff bestehen und erstrecken sich parallel zu der Drehachse des Trägerkörpers (22), und zwar über zumindest eine Länge, entlang der sich das Kabel (14) beim Auf- bzw. Abrollen bewegt.

Jede Welle (100), (102), (104) und (106) weist an einem Ende ein Zahnrad (108) auf.

Zahnräder benachbarter Wellen sind jeweils über eine Kette oder Riemen (110) und (112) verbunden, so daß beim Drehen einer Welle sämtliche Wellen mitgedreht werden. Hierdurch ist erkennbar ein überaus leichtgängiges Auf- und Abrollen des Kabels (14) möglich. Vorzugsweise wird jedoch eine Welle zwangsangetrieben.

Im Ausführungsbeispiel ist die Welle (104) die Antriebswelle. Diese kann durch einen gesonderten Motor oder von dem die Aufwickeltrommel (24) drehenden Motor unter Zwischenschaltung eines Übersetzungsgetriebes angetrieben werden.

Die die Wirkverbindung zwischen den Wellen herstellenden Zahnräder und Ketten können selstverständlich durch gleichwirkende Elemente ersetzt werden.

Schließlich ist noch darauf hinzuweisen, daß von der Führung (30) ein Knickschutz in Form z. B. eines Rohrstutzens (114) ausgeht, damit das Kabel geschont wird.

## Patentansprüche

1. Vorrichtung (10) zum Verstauen eines sich aus mehreren Adern zusammensetzenden dicken Kabels (14, 16), insbesondere Versorgungskabels einer zentralen Bordnetzversorgungsanlage für z.B. Flugzeuge, mit einer drehbaren Aufwickeltrommel, die einen hohlzylindrischen Trägerkörper (22) zum einlagigen Aufwickeln mehrerer Windungen des Kabels aufweist, das seinerseits über ein innerhalb des Trägerkörpers verlaufendes Ausgleichskabel (46) vorzugsweise mit einem Festanschluß verbunden ist, wobei sich das Ausgleichskabel in Achsrichtung der Aufwickeltrommel derart erstreckt, daß das Ausgleichskabel beim Abwickeln des Anschlußkabels von der Aufwickeltrommel stärker und beim Aufwickeln schwächer verdreht ist,
**dadurch gekennzeichnet,**
daß das Ausgleichskabel (46) oder bereichsweise freiliegende Adern dieses in etwa mittig innerhalb des Trägerkörpers (22) von einer Aufnahme (62, 76) gehalten sind.

2. Vorrichtung nach zumindest Anspruch 1,
**dadurch gekennzeichnet,**
daß das Ausgleichskabel (46) durch die Aufnahme (62, 76) in etwa zwei gleichlange Abschnitte (70, 72) unterteilt ist.

3. Vorrichtung nach zumindest Anspruch 1,
**dadurch gekennzeichnet,**
daß die Aufnahme (62, 76) um die Drehachse (58) der Aufwickeltrommel (24) und relativ zu dieser drehbar ausgebildet ist.

4. Vorrichtung nach zumindest Anspruch 1,
**dadurch gekennzeichnet,**
daß die Aufnahme (62, 76) ein zumindest eine im Achsbereich der Aufwickeltrommel (24) verlaufende zum Durchführen des Ausgleichskabels bzw. Adern dieses bestimmte Durchbrechnung (60, 78, 80) aufweisendes Scheibenelement ist.

5. Vorrichtung nach Anspruch 4,
**dadurch gekennzeichnet,**
daß die Aufnahme (76) mehrere im Achsbereich der Aufwickeltrommel (24) verlaufende Durchbrechungen (78, 80) aufweist.

6. Vorrichtung nach zumindest Anspruch 1,
**dadurch gekennzeichnet,**
daß die Aufnahme (62) ein von von der Innenwandung (64) des Trägerkörpers (22) ausgehenden Führungen (66, 68) gehaltenes Scheibenelement ist.

7. Vorrichtung nach zumindest Anspruch 1,
**dadurch gekennzeichnet,**
daß die Aufnahme (76) ein von einer entlang der Aufwickeltrommellängsachse (58) verlaufenden Welle (74) ausgehendes scheibenförmiges Element (76) ist.

8. Vorrichtung nach zumindest einem der vorhergehenden Ansprüche,
**dadurch gekennzeichnet,**
daß das Ausgleichskabel (46) bei aufgewickeltem Kabel (14, 16) innerhalb des Trägerkörpers (22) einen sinusförmigen Verlauf besitzt.

9. Vorrichtung nach zumindest Anspruch 1,
**dadurch gekennzeichnet,**
daß die Aufwickeltrommel (24) in einem quaderförmigen Gehäuse (26, 28) angeordnet ist.

10. Vorrichtung nach Anspruch 9,
**dadurch gekennzeichnet,**
daß das Gehäuse (26, 28) mit einem parallel zur Längsachse (58) der Aufwickeltrommel (24) verlaufenden Kabeldurchführungsschlitz (34) versehen ist.

11. Vorrichtung nach zumindest einem der vorhergehenden Ansprüche,
**dadurch gekennzeichnet,**
daß das Kabel (14, 16) über eine vorzugsweise von einem Schneckengetriebe in Achsrichtung der Aufwickeltrommel (24) im Bereich des Schlitzes (34) verschiebbar angeordneten Führung (30) aus dem Gehäuse (26) geführt ist.

12. Vorrichtung nach zumindest einem der vorhergehenden Ansprüche,
**dadurch gekennzeichnet,**
daß zu einer reibungsmindernden Abstützung des Kabels (14, 16) umfangsseitig um die und im Abstand zu der Kabelaufwickelrolle (24) herum sowie achsparallel zu dieser drehbar gelagerte Gleitelemente (36, 38, 40) wie aneinandergereihte Rollen verlaufen.

13. Vorrichtung nach zumindest einem der vorhergehenden Ansprüche, wobei die Aufwickeltrommel insbesondere unterhalb einer Fluggastbrücke angeordnet ist,
**dadurch gekennzeichnet,**
daß die Drehachse (58) der Aufwickeltrommel (24) horizontal oder im wesentlichen horizontal verläuft.

14. Vorrichtung nach zumindest Anspruch 13,
**dadurch gekennzeichnet,**
daß zwei Vorrichtungen (10, 12) zum Verstauen des Kabels (14, 16) nebeneinander angeordnet sind.

15. Vorrichtung nach vorzugsweise Anspruch 12,
**dadurch gekennzeichnet,**
daß die Gleitelemente sich achsparallel zu dem Trägerkörper (22) erstreckende Zylinderelemente wie kugelgelagerte Wellen (100, 102, 104, 106) sind.

16. Vorrichtung nach Anspruch 15,
**dadurch gekennzeichnet,**
daß die zueinander beabstandeten und um den Umfang des Trägerkörpers (22) verteilten Zylinderelemente (100, 102, 104, 106) untereinander in Wirkverbindung stehen.

17. Vorrichtung nach Anspruch 16,
**dadurch gekennzeichnet,**
daß die Zylinderelemente (100, 102, 104, 106) über vorzugsweise Zahnräder (108) und in diese eingreifende Ketten (110, 112) oder Riemen miteinander verbunden sind.

18. Vorrichtung nach zumindest einem der vorhergehenden Ansprüche,
**dadurch gekennzeichnet,**
daß eine Zylinderlement (104) zum Drehen der weiteren Zylinderlemente (100, 102, 106) motorangetrieben ist.

## Claims

1. A device (10) for stowing away a cable (14, 16) composed of several leads, in particular a supply cable for a central energy supply system on board aircraft, for example, comprising a rotary winding drum having a hollow cylindrical bearing body (22) for single-layer winding of several turns of said cable, which in its turn is connected by a compensating cable (46) inside the bearing body preferably to a fixed connection, with the compensating cable extending in the axial direction of said winding drum such that said compensating cable is more strongly twisted when said connecting cable is unwound from said winding drum and less strongly when wound onto said winding drum,
**wherein**
said compensating cable (46) or leads thereof exposed in sections are held by a receptacle (62, 76) approximately centrally in said bearing body (22).

2. A device according to Claim 1 at least,
**wherein**
said compensating cable (46) is subdivided by said receptacle (62, 76) into two sections (70, 72) of approximately equal length.

3. A device according to Claim 1 at least,
**wherein**
said receptacle (62, 76) is designed rotatable about the rotation axis (58) of said winding drum (24) and relative to said winding drum (24).

4. A device according to Claim 1 at least,
**wherein**
said receptacle (62, 76) is a disk element having at least one aperture (60, 78, 80) intended for passing through said compensating cable or leads thereof and running in the axial area of said winding drum (24).

5. A device according to Claim 4,
**wherein**
said receptacle (76) has several apertures (78, 80) in the axial area of said winding drum (24).

6. A device according to Claim 1 at least,
**wherein**
said receptacle (62) is a disk element held by guides (66, 68) extending from the inner wall (64) of said bearing body (22).

7. A device according to Claim 1 at least,
**wherein**
said receptacle (76) is a disk-shaped element (76) extending from a shaft (74) running along the winding drum longitudinal axis (58).

8. A device according to at least one of the previous claims,
**wherein**
said compensating cable (46) has a sinusoidal course inside said bearing body (22) when said cable (14, 16) is wound on.

9. A device according to Claim 1 at least,
**wherein**
said winding drum (24) is disposed in a rectangular housing (26, 28).

10. A device according to Claim 9,
**wherein**
said housing (26, 28) is provided with a cable leadthrough slot (34) parallel to the longitudinal axis (58) of said winding drum (24).

11. A device according to at least one of the previous claims,
**wherein**
said cable (14, 16) is passed out of said housing (26) by a guide (30) preferably slidably disposed for movement by a worm gear in the axial direction of said winding drum (24) in the area of said slot (34).

12. A device according to at least one of the previous claims,
**wherein**
rotatably mounted sliding elements (36, 38, 40) such as rollers in a row are provided for friction-reducing support of said cable (14, 16) on the circumference around and at a distance from said winding drum (24) and axis-parallel thereto.

13. A device according to at least one of the previous claims, with said winding drum being disposed in particular underneath a passenger boarding bridge,
**wherein**
said rotation axis (58) of said winding drum (24) is horizontal or substantially horizontal.

14. A device according to Claim 13 at least,
**wherein**
two devices (10, 12) for stowing away said cable (14, 16) are disposed adjacent to one another.

15. A device preferably according to Claim 12,
**wherein**
said sliding elements are cylindrical elements such as ball bearing shafts (100, 102, 104, 106) extending axis-parallel to said bearing body (22).

16. A device according to Claim 15,
**wherein**
said cylindrical elements (100, 102, 104, 106) at a distance from one another and distributed around the circumference of said bearing body (22) interact with one another.

17. A device according to Claim 16,
**wherein**
said cylindrical elements (100, 102, 104, 106) are connected to one another by preferably gears (108) and chains (110, 112) or belts engaging with said gears.

18. A device according to at least one of the previous claims,
**wherein**
one cylindrical element (104) is motor driven for turning the remaining cylindrical elements (100, 102, 106).

## Revendications

1. Dispositif (10) servant à abriter un câble épais (14, 16) constitué de plusieurs fils, notamment un câble d'alimentation d'une unité centrale d'alimentation de réseau de bord d'avions par exemple, avec un tambour d'enroulement qui comporte un corps support (22) cylindrique creux pour enrouler en une couche plusieurs spires du câble, qui à son tour est relié de préférence par une connexion rigide à un câble de compensation (46) s'étendant à l'intérieur du corps support, le câble de compensation s'étendant selon l'axe du tambour, de sorte que lors du déroulement du câble de connexion par le tambour d'enroulement le câble de compensation est tordu plus fortement et à l'enroulement tordu plus faiblement, caractérisé en ce que le câble de compensation (46) ou ses fils partiellement libres sont maintenus par une prise (62, 76) approximativement au milieu et à l'intérieur du corps support (22).

2. Dispositif selon la revendication 1, caractérisé en ce que le câble de compensation (46) est partagé par la prise (62, 76) en environ deux parties de même longueur (70, 72).

3. Dispositif selon la revendication 1, caractérisé en ce qu'on réalise la prise (62, 76) de façon à ce qu'elle puisse tourner autour de l'axe de rotation (58) du tambour d'enroulement (24) et par rapport à lui.

4. Dispositif selon la revendication 1, caractérisé en ce que la prise (62, 76) est un élément de disque présentant au moins dans le domaine de l'axe du tambour d'enroulement (24) un passage (60, 78, 80) destiné à laisser passer le câble de compensation ou ses fils.

5. Dispositif selon la revendication 4, caractérisé en ce que la prise (76) présente plusieurs passages (78, 80) s'étendant dans le domaine de l'axe du tambour d'enroulement (24).

6. Dispositif selon la revendication 1, caractérisé en ce que la prise (62) est un élément de disque maintenu par des guidages (66, 68) partant de la paroi interne (64) du corps support (22).

7. Dispositif selon la revendication 1, caractérisé en ce que la prise (76) est un élément (76) en forme de disque partant de l'arbre (74) qui s'étend le long de l'axe longitudinal (58) du tambour d'enroulement.

8. Dispositif selon au moins l'une des revendications précédentes, caractérisé en ce que le câble de compensation (46) possède un profil sinusoïdal quand le câble (14, 16) est enroulé à l'intérieur du corps support (22).

9. Dispositif selon au moins la revendication 1, caractérisé en ce que le tambour d'enroulement (24) est implanté dans un boîtier (26, 28) parallélipipédique.

10. Dispositif selon au moins la revendication 9, caractérisé en ce que le boîtier (26, 28) comprend une fente de passage (34) du câble s'étendant parallèlement à l'axe longitudinal (58) du tambour d'enroulement (24).

11. Dispositif selon au moins l'une des revendications précédentes, caractérisé en ce que le câble (14, 16) est guidé hors du boîtier (26) par un guidage disposé (30) dans la zone de la fente (34) en pouvant coulisser de préférence par un réducteur à vis dans le sens de l'axe du tambour d'enroulement (24).

12. Dispositif selon au moins l'une des revendications précédentes, caractérisé en ce que pour guider le câble (14, 16) en diminuant les frottements, on dispose en rotation des éléments de glissement (36, 38, 40) disposés à la périphérie tout autour du tambour d'enroulement de câble (24), et à une certaine distance par rapport à lui ainsi que parallèlement à son axe, comme des galets rangés l'un contre l'autre.

13. Dispositif selon au moins l'une des revendications précédentes, dans lequel le tambour d'enroulement est implanté notamment en dessous d'une passerelle d'accès des passagers, caractérisé en ce que l'axe de rotation (58) du tambour d'enroulement (24) s'étend horizontalement ou essentiellement horizontalement.

14. Dispositif selon au moins la revendication 13, caractérisé en ce qu'on implante deux dispositifs (10, 12) pour abriter le câble (14, 16) côte à côte.

15. Dispositif selon des préférence la revendication 12, caractérisé en ce que les éléments de glissement sont des éléments de cylindres s'étendant parallèlement à l'axe du corps support (22) comme des arbres logés sur roulement à billes (100, 102, 104, 106).

16. Dispositif selon la revendication 15, caractérisé en ce que les éléments de cylindres répartis autour de la périphérie du corps support (22) avec un écartement entre eux (100, 102, 104, 106) coopèrent entre eux.

17. Dispositif selon la revendication 16, caractérisé en ce que les éléments de cylindre (100, 102, 104, 106) sont reliés par des roues dentées de préférence (108) et des chaînes (110, 112) en prises avec celles-ci ou des courroies.

18. Dispositif selon au moins l'une des revendications précédentes, caractérisé en ce qu'un élément de cylindre (104) est entraîné par un moteur pour faire tourner les autres éléments de cylindres (100, 102, 106).
